# EUROPEAN PATENT SPECIFICATION

(11) **EP 4 326 912 B1**
(45) Date of publication and mention of the grant of the patent: **14.10.2026**
(21) Application number: 21721219.0
(22) Date of filing: 21.04.2021
(51) Int. Cl.: C21C 7/06, C21C 7/10, C21B 13/14, B22F 9/08, C22C 33/02

(54) **GAS ATOMIZATION OF MOLTEN STEEL**
GASZERSTÄUBUNG VON GESCHMOLZENEM STAHL
ATOMISATION GAZEUSE D'ACIER FONDU

(43) Date of publication of application: 28.02.2024
(73) Proprietor: ArcelorMittal, 1160 Luxembourg (LU)
(72) Inventor: KAUSHIK, Pallava, Northbrook, IL 60062 (US); CARO GUTIERREZ, Alejandro, 33418 Gozón Asturias (ES); COUVRAT, Mathieu, 42210 Montrond les Bains (FR)
(74) Representative: Lavoix
(86) International application number: PCT/IB2021/053289
(87) International publication number: WO 2022/224013

(56) References cited:
- JP-A- 2006 233 264
- US-A1- 2013 180 360

## Description

The present invention relates to the production of steel powders and in particular to the production of steel powders by gas atomization for additive manufacturing. The present invention also relates to the installation for producing the steel powders thereof.

There is an increasing demand for steel powders for additive manufacturing and the manufacturing processes have to be adapted consequently.

It is notably known to melt metal material in an electric furnace or a vacuum melting furnace, to refine the composition and to pour the molten steel in a tundish connected to an atomizer. Such batch process is not compatible with the need for producing large amounts of steel powders, preferably in a continuous mode.

It is also known from US2013180360 to obtain molten iron from the iron making process, to refine the composition in a converter and to pour the molten steel in a tundish connected to a water atomizer.

The aim of the present invention is therefore to remedy the drawbacks of the facilities and processes of the prior art by providing a versatile process for producing steel powders. In particular, the aim is to provide a process capable of using different raw materials and capable of producing powders at different steel compositions depending on the demand, while possibly running in a continuous mode.

For this purpose, a first subject of the present invention consists of a process for the production of steel powders comprising the steps of:
- Providing molten iron from a blast furnace,
- Refining the molten iron in a converter to form molten steel comprising up to 600 ppm C, up to 120 ppm S, up to 125 ppm P, up to 50 ppm N and up to 1200 ppm O,
- Refining the molten steel in a vacuum arc degasser to obtain a refined molten steel comprising from 20 to less than 600 ppm C, from 15 to less than 120 ppm S, up to 125 ppm P, up to 80 ppm N and up to 30 ppm O,
- Pouring the refined molten steel in a plurality of induction furnaces,
- Adding, in each of the plurality of induction furnaces, at least one ferroalloy to adjust the steel composition to the one of the desired steel powder,
- Pouring the molten steel at the desired composition of each induction furnace in a dedicated reservoir connected to at least one gas atomizer,
- Feeding the at least one gas atomizer of each reservoir in molten steel from each reservoir under pressure and gas atomizing said molten steel to form the steel powder at the desired composition.

The process according to the invention may also have the optional features listed below, considered individually or in combination:
- the process is continuous,
- the molten iron from the blast furnace is desulfurized so that it contains less than 50ppm S in weight,
- the molten steel comprises up to 250 ppm C and/or up to 90 ppm P and/or up to 25 ppm N,
- during the refinement in the vacuum arc degasser, molten steel is decarburized by using dissolved oxygen in steel,
- during the refinement in the vacuum arc degasser, molten steel is deoxidized until the dissolved O content is lower than or equal to 4 ppm,
- during the refinement in the vacuum arc degasser, molten steel is desulphurized by stirring the slag against the steel,
- the temperature of the refined molten steel at the end of the refinement in the vacuum arc degasser is between 1580 and 1680°C,
- the refined molten steel is directly poured from the vacuum arc degasser to the plurality of induction furnaces,
- the refined molten steel is first poured in a tundish and then poured from the tundish to the plurality of induction furnaces,
- the tundish is capable of simultaneously pouring the refined molten steel in all the induction furnaces,
- the temperature in the tundish is maintained between 1520 and 1620°C,
- the tundish is purged with Argon to control the oxygen content in the tundish,
- the temperature in the plurality of induction furnaces is maintained between 1500 and 1700°C,
- the temperature in at least one of the plurality of induction furnaces is maintained between 1620 and 1650°C,
- the ferroalloy added in the induction furnaces is not pre-melted.
- scraps or Direct Reduced Iron or silicide alloys or nitride alloys or pure elements or a mixture thereof are added in at least one of the plurality of induction furnaces,
- the induction furnaces are not atmospherically controlled,
- at least one of the plurality of induction furnaces is a vacuum induction furnace,
- the atmosphere in each of the dedicated reservoirs is Argon, Nitrogen or a mixture thereof,
- the temperature in each of the dedicated reservoirs is maintained between 1300 and 1750°C,
- the temperature in each of the dedicated reservoirs is at least 150°C above the liquidus temperature of the molten steel,

A second subject of the invention consists of an installation for the production of steel powders comprising:
- A blast furnace,
- A converter configured to refine molten iron and form molten steel comprising up to 600 ppm C, up to 120 ppm S, up to 125 ppm P, up to 50 ppm N and up to 1200 ppm O,
- A vacuum arc degasser configured to refine molten steel to obtain a refined molten steel comprising from 20 to less than 600 ppm C, from 15 to less than 120 ppm S, up to 125 ppm P, up to 80 ppm N and up to 30 ppm O.
- A plurality of induction furnaces,
- A ferroalloy feeding unit capable of feeding the plurality of induction furnaces in at least one ferroalloy,
- A dedicated reservoir to each induction furnace, each dedicated reservoir being connected to at least one gas atomizer and capable of being pressurized.

The installation according to the invention may also have the optional features listed below, considered individually or in combination:
- The installation further comprises a tundish capable of simultaneously pouring the molten steel in all the induction furnaces,
- the tundish is positioned above the plurality of induction furnaces,

Other characteristics and advantages of the invention will be described in greater detail in the following description.

In a first step of the process, molten iron (or pig iron) is provided from a blast furnace.

The blast furnace is conventionally supplied with solid materials, mainly sinter, pellets, iron ore and carbonaceous material, generally coke, charged into its upper part, called throat of the blast furnace. The iron-containing burden (sinter, pellets and iron ore) is converted to pig iron conventionally by reducing the iron oxides with a reducing gas (containing CO, H2 and N2 in particular), which is formed by combustion of the carbonaceous material in the tuyeres located in the lower part of the blast furnace, where air, preheated to a temperature of between 1000 and 1300°C, called hot blast, is injected.

The pig iron and slag are tapped from the crucible in the bottom of the blast furnace. Pig iron is poured into a transport ladle which is then poured into a converter (or BOF for Basic Oxygen Furnace) in which scraps have conventionally been previously loaded.

Pig iron can be transported directly to the converter or it can be first pretreated before being poured into the converter. According to one variant of the invention, the pig iron from the blast furnace is sent to a hot metal desulfurization station before being poured into the converter. In that case, the pig iron is preferably desulfurized so that it contains less than 50ppm S in weight. This desulfurization step facilitates the refining of the molten steel downstream and thus the obtainment of the desired steel composition.

In a second step of the process, the molten iron is refined in the converter to form molten steel comprising, in weight, up to 600 ppm C, up to 120 ppm S, up to 125 ppm P, up to 50 ppm N and up to 1200 ppm O.

The refining process of iron into steel includes a step of oxygen blowing to decarburize the iron and a post-blowing step in which a neutral gas such as argon is blown. Lime and/or dolomite are added into the converter so as to remove impurities such as silicon, phosphor, and manganese and reach the required levels of impurities for the desired steel composition. Those additions together with the impurities extracted from pig iron form converter slags.

As the decarburisation reaction releases energy, scraps are usually added to control the temperature of the produced liquid steel. Mineral additives, such as lime, dolomite, limestone, etc.... may further be charged to control the chemical composition and temperature of the produced liquid steel. Those mineral additions may also be used to monitor the chemical composition of the slag, as slag composition has an impact on the equilibrium between liquid steel and slag and thus on promotion of reactions occurring into the liquid steel.

In the present invention, in order to offer a generic composition compatible with all the possible powder compositions to be produced, the composition, at the end of the refining step in the converter, comprises, in weight, up to 600 ppm C, up to 120 ppm S, up to 125 ppm P, up to 50 ppm N and up to 1200 ppm O, the remainder being iron and inevitable impurities resulting from the process.

In certain cases where demanding powder compositions have to be produced, the composition is further limited to up to 250 ppm C and/or up to 90 ppm P and/or up to 25 ppm N.

The molten steel from the converter is then tapped from the converter to a recuperation ladle. Preferably, and in order to minimize the slag carry-over from the converter, only the first heat of the sequence is tapped to the recuperation ladle which is to be transported to the next step of the process according to the invention. The remaining steel and slag are tapped in a standard steel ladle later during the tapping process and transferred to another part of the plant for another process. By minimizing the slag carry-over, additional deoxidizing is prevented and the level of impurities in the molten steel is lowered.

The molten steel is transferred from the converter to a vacuum arc degasser (VAD). In particular, the recuperation ladle is poured in the pre-heated ladle of the VAD. This transfer is preferably done without controlling the atmosphere.

In a third step of the process, the molten steel is refined in the vacuum arc degasser.

The main purpose of this step is to decarburize, de-oxidize and desulfurize the molten steel. Optionally, this step can include a primary alloying of the molten steel.

A vacuum arc degasser is a vacuum chamber or pit inside which a pre-heatable ladle is placed. The chamber or pit entirely encloses the ladle. Bath additions are done through a vacuum lock positioned in the chamber lid and directly over top of the ladle. The lid is also fabricated so that graphite electrodes can move up and down without breaking the vacuum seal, thus permitting arc heating under vacuum. An argon stir and subsequent purge is usually started as soon as steel reaches the ladle and continues throughout the entire VAD treatment. Once the ladle is filled, the lid is fitted overtop and sealed. The vacuum is created through a sidewall port by a vacuum pumping device.

In a first sub-step of the process, the molten steel is preferably reheated to a temperature comprised between 1580 and 1650°C. It is done by electric arc heating by lowering the electrodes in the molten steel.

In a second sub-step of the process, fluxes are preferably added to cover the molten steel and to prevent the molten steel from foaming out during the subsequent sub-steps.

In a third sub-step of the process, the vacuum is applied and the pressure in the chamber is preferably decreased below 1 Torr so that initial degassing and deoxidation occurs.

In a fourth sub-step of the process, the steel is preferably decarburized. It can be performed by using dissolved oxygen in steel or optionally by using a consumable oxygen lance. The decarburization can be carried out until the C content is as low as 20ppm.

After decarburization, the vacuum arc degasser preferably continues to be operated under vacuum for cleanliness reasons.

In a fourth sub-step of the process, the steel is preferably deoxidized. It can be done by adding desulphurizing materials in the ladle so that steel is deoxidized first and then the desulfurization takes place. Examples of such materials are lime, Ca-aluminate fluxes, fluorospar. The slag is simultaneously deoxidized. The deoxidation can be carried out until the dissolved O content is lower than or equal to 4 ppm or until the total oxygen content is lower than 30 ppm.

In a fifth sub-step of the process, the steel is preferably desulfurized. It can be done by stirring the slag against the metal (with or without vacuum), the stirring promoting the reaction of desulfurization. In that case, a reducing slag comprising a burnt fine-particle lime and fluorspar mixture is more preferably employed (usually 1.5 to 2.0% of the charge weight).

In a sixth sub-step of the process, a primary alloying of the molten steel can optionally be done by adding ferroalloys or silicide alloys or nitride alloys or pure metals or a mixture thereof. This primary alloying is of particular interest when all the different steel powders to be produced in the plurality of gas atomizers have in common a given alloying element. It can be done in either single or stage additions.

Ferroalloys refer to various alloys of iron with a high proportion of one or more other elements such as silicon, niobium, boron, chromium, aluminum, manganese, molybdenum.... The main alloys are FeAl (usually comprising 40 to 60 wt%AI), FeB (usually comprising 17.5 to 20 wt%B ), FeCa, FeCr (usually comprising 50 to 70 wt%Cr), FeMg, FeMn, FeMo (usually comprising 60 to 75 wt%Mo), FeNb (usually comprising 60 to 70 wt%Nb), FeNi, FeP, FeS, FeSi (usually comprising 15 to 90 wt%Si), FeSiMg, FeTi (usually comprising 45 to 75 wt%Ti), FeV (usually comprising 35 to 85 wt%V), FeW (usually comprising 70 to 80 wt%Mo).

Silicide alloys can notably be MnSi, CrSi, CaSi. Nitride alloys can be MnN.

Pure metals can notably be iron, copper, nickel, cobalt, chromium, calcium, rare earth metals.

After primary alloying of the molten steel, a final rinse is preferably done to increase steel cleanlines. A rinse is a bubbling of Argon at a smaller flow rate to float large inclusions; typically larger than 100 µm. This final rinse can last up to 10 minutes.

At the end of the refinement in the VAD, the molten steel is preferably reheated by electric arc heating by lowering the electrodes in the molten steel. It is more preferably reheated to a temperature comprised between 1580 and 1680°C.

Thanks to the refinement in the VAD, the composition of the molten steel is further tuned so as to offer a generic composition compatible with all the possible powder compositions to be produced. At the end of the refining step in the VAD, the steel composition comprises, in weight, from 20 to less than 600 ppm C, from 15 to less than 120 ppm S, up to 125 ppm P, up to 80 ppm N and up to 30 ppm O.

In a fourth step of the process, the molten steel from the VAD is poured in a plurality of induction furnaces.

Induction furnaces are electrical furnaces in which the heat is applied by induction heating of metal. An induction furnace consists of a nonconductive crucible holding the charge of metal to be melted, surrounded by a coil of copper wire. A powerful alternating current flows through the wire. The coil creates a rapidly reversing magnetic field that penetrates the metal.

Thanks to the plurality of induction furnaces, the process for producing the steel powders can be easily made continuous.

Each induction furnace can be operated independently of the other induction furnaces. It can notably be shut down for maintenance or repair while the other induction furnaces are still running. It can also be fed with ferroalloys, scrap, Direct Reduced Iron (DRI), silicide alloys, nitride alloys or pure elements in quantities which differ from one induction furnace to the others.

The number of induction furnaces is adapted to the flow of molten steel coming from the vacuum arc degasser and/or to the desired flow of steel powder at the bottom of the atomizers.

According to one variant of the invention, the molten steel from the vacuum arc degasser is directly poured in the plurality of induction furnaces. "directly" includes in the present case the use of a ladle to transfer the molten steel to the plurality of induction furnaces.

According to another variant of the invention, the molten steel from the vacuum arc degasser is first poured in a tundish and then poured from the tundish to the plurality of induction furnaces. Thanks to this configuration, the molten steel can be easily distributed to the induction furnaces on demand. The tundish is mainly used as a storage reservoir. It is batch-fed by the vacuum arc degasser and can feed each induction furnace independently. In particular, it is capable of simultaneously pouring the molten steel in all the induction furnaces. One way to achieve this capability is to equip the tundish with as many pouring means as the number of induction furnaces. Pouring means can be pouring holes and corresponding stopper rods.

The temperature in the tundish is preferably maintained between 1520 and 1620°C.

The tundish is preferably purged with Argon to control the oxygen content in the tundish.

In a fifth step of the process, at least one ferroalloy is added in each of the plurality of induction furnaces to adjust the steel composition to the composition of the desired steel powder.

Ferroalloys refer to various alloys of iron with a high proportion of one or more other elements such as silicon, niobium, boron, chromium, aluminum, manganese, molybdenum.... The main alloys are FeAl (usually comprising 40 to 60 wt%Al), FeB (usually comprising 17.5 to 20 wt%B ), FeCa, FeCr (usually comprising 50 to 70 wt%Cr), FeMg, FeMn, FeMo (usually comprising 60 to 75 wt%Mo), FeNb (usually comprising 60 to 70 wt%Nb), FeNi, FeP, FeS, FeSi (usually comprising 15 to 90 wt%Si), FeSiMg, FeTi (usually comprising 45 to 75 wt%Ti), FeV (usually comprising 35 to 85 wt%V), FeW (usually comprising 70 to 80 wt%Mo).

The mix of ferroalloys and the relative quantity of each of the ferroalloys is adapted case by case to reach the composition of the desired steel powder. The ferroalloys added in the induction furnace are preferably not pre-melted.

Optionally, scraps or Direct Reduced Iron or silicide alloys or nitride alloys or pure elements or a mixture thereof can be also added to ease the composition adjustment.

Direct Reduced Iron is produced from the direct reduction of iron ore (in the form of lumps, pellets, or fines) to iron by a reducing gas or elemental carbon produced from natural gas or coal.

Silicide alloys can notably be MnSi, CrSi, CaSi. Nitride alloys can be MnN.

Pure elements can notably be carbon and pure metals such as iron, copper, nickel, cobalt, chromium, calcium, rare earth metals.

This step can be done independently and asynchronously in each of the induction furnaces. As stated above, different steel compositions can be prepared in different induction furnaces to obtain different steel powders.

The temperature in the plurality of induction furnaces is preferably maintained between 1500 and 1700°C, more preferably between 1620 and 1700°C to have a proper melting of the ferroalloy and homogenization of the composition. The temperature in at least one of the plurality of induction furnaces is more preferably maintained between 1580 and 1650°C to extend the induction furnace crucible and refractory lives.

The atmosphere in each of the induction furnaces is preferably not controlled. That said, in one variant of the invention, at least one of the induction furnaces is capable of having its atmosphere controlled. In particular, it is a vacuum induction furnace.

The minimal duration in each induction furnace is controlled by the atomizing rate and the rate at which the liquid steel can be drained from the reservoir.

In a sixth step of the process, for each induction furnace, the molten steel at the desired composition is poured in a dedicated reservoir connected to at least one gas atomizer. By "dedicated" it is meant that the reservoir is paired with a given induction furnace. That said, a plurality of reservoirs can be dedicated to one given induction furnace. For the sake of clarity, each induction furnace has its own production stream with at least one reservoir connected to at least one gas atomizer. With such parallel and independent production streams, the process for producing the steel powders is versatile and can be easily made continuous.

The pouring can be done directly from the induction furnace to the reservoir or with the help of a transfer ladle.

The reservoir is mainly a storage tank capable of being atmospherically controlled, capable of heating the molten steel and capable of being pressurized.

The atmosphere in each of the dedicated reservoirs is preferably Argon, Nitrogen or a mixture thereof to avoid the oxidation of the molten steel.

The steel composition poured in each reservoir is heated above its liquidus temperature and maintain at this temperature Thanks to this overheating, the clogging of the atomizer nozzle is prevented. Also, the decrease in viscosity of the melted composition helps obtaining a powder with a high sphericity without satellites, with a proper particle size distribution.

The composition is preferably heated at a temperature at least 150°C above its liquidus temperature to have the viscosity decrease enough. That said, as the surface tension increases with temperature, it is preferred not to heat the composition at a temperature more than 450°C above its liquidus temperature.

Preferably, the composition is heated at a temperature 200 to 300°C above its liquidus temperature.

In one variant of the invention, the composition is heated between 1300 and 1750°C, preferably between 1550 and 1750°C, which represents a good compromise between viscosity decrease and surface tension increase.

The reservoir is either continuously under pressure or it can be pressurized once it has been fed with the molten steel. Means for pressurizing the reservoir are designed accordingly. The continuous pressurization of each reservoir is favored to have a continuous flow from the reservoir to at least one atomizer connected to the reservoir. The pressure in each of the dedicated reservoirs is adjusted to keep the metal flow constant. The pressure setting depends on a plurality of parameters. It can be adjusted case by case by the person skilled in the art.

The reservoir can comprise one single chamber or a plurality of chambers capable of being pressurized independently from each other. Thanks to a plurality of chambers, the process for producing the steel powders can be made continuous even more easily.

In a seventh step of the process, when a dedicated reservoir is pressurized, the molten steel can flow from the reservoir to at least one of the gas atomizers connected to the reservoir.

The molten composition is atomized into fine metal droplets by forcing a molten metal stream through an orifice at the bottom of the reservoir, the nozzle, at moderate pressures and by impinging it with jets of gas. The gas is introduced into the metal stream as it leaves the nozzle, serving to create turbulence as the entrained gas expands (due to heating) and exits into a large collection volume, the atomizing tower. The latter is filled with inert gas to prevent the powder from oxidizing. The metal droplets cool down during their fall in the atomizing tower. Gas atomization is preferred because it favors the production of powder particles having a high degree of roundness and a low amount of satellites. The particles are also less oxidized than with water atomization.

The atomization gas is preferably argon or nitrogen. They both increase the melt viscosity slower than other gases, e.g. helium, which promotes the formation of smaller particle sizes. They also control the purity of the chemistry, avoiding undesired impurities, and play a role in the good morphology of the powder. Finer particles can be obtained with argon than with nitrogen since the molar weight of nitrogen is 14.01 g/mole compared with 39.95 g/mole for argon. On the other hand, the specific heat capacity of nitrogen is 1.04 J/(g K) compared to 0.52 for argon. So, nitrogen increases the cooling rate of the particles. Argon might be preferred over nitrogen to avoid the contamination of the composition by nitrogen.

The gas flow impacts the particle size distribution and the microstructure of the metal powder. In particular, the higher the flow, the higher the cooling rate. Consequently, the gas to metal ratio, defined as the ratio between the gas flow rate (in m³/h) and the metal flow rate (in Kg/h), is preferably kept between 1 and 5, more preferably between 1.5 and 3.

The nozzle diameter has an impact on the molten metal flow rate and, thus, on the particle size distribution and on the cooling rate. The maximum nozzle diameter is preferably limited to 6 mm to limit the increase in mean particle size and the decrease in cooling rate. The nozzle diameter is more preferably between 2 and 3 mm to more accurately control the particle size distribution and favor the formation of the desired microstructure.

The metal powders obtained by atomization can be sieved to keep the particles whose size better fits the technique, notably the additive manufacturing technique, to be used afterwards. For example, in case of additive manufacturing by Powder Bed Fusion, the range 15-50 µm is preferred. In the case of additive manufacturing by Laser Metal Deposition or Direct Metal Deposition, the range 45-150 µm is preferred.

The parts made of the metal powders produced by the present process can be obtained by additive manufacturing techniques such as Powder Bed Fusion (LPBF), Direct metal laser sintering (DMLS), Electron beam melting (EBM), Selective heat sintering (SHS), Selective laser sintering (SLS), Laser Metal Deposition (LMD), Direct Metal Deposition (DMD), Direct Metal Laser Melting (DMLM), Direct Metal Printing (DMP), Laser Cladding (LC), Binder Jetting (BJ). Coatings made of the metal powder according to the invention can also be obtained by manufacturing techniques such as Cold Spray, Thermal Spray, High Velocity Oxygen Fuel. They can also be obtained by conventional powder metallurgy, such as press and sinter.

The process according to the invention can be implemented thanks to an installation comprising:
- A blast furnace,
- A converter capable of refining molten iron and form molten steel comprising up to 600 ppm C, up to 120 ppm S, up to 125 ppm P, up to 50 ppm N and up to 1200 ppm O,
- A vacuum arc degasser capable of refining molten steel to obtain a refined molten steel comprising from 20 to less than 600 ppm C, from 15 to less than 120 ppm S, up to 125 ppm P, up to 80 ppm N and up to 30 ppm O,
- A plurality of induction furnaces,
- A ferroalloy feeding unit capable of feeding the plurality of induction furnaces in at least one ferroalloy,
- A dedicated reservoir to each induction furnace, each dedicated reservoir being connected to at least one gas atomizer and capable of being pressurized.

The installation can further comprise a tundish capable of simultaneously pouring the molten steel or refined molten steel in all the induction furnaces. Such a tundish facilitates the storage of the molten steel and the feeding of the induction furnaces on demand. The tundish is preferably positioned above the plurality of induction furnaces to make the feeding even easier.

The induction furnaces are preferably movable in and out of their position and tiltable to de-slag and to pour the liquid steel in the reservoir. They are preferably positioned on one floor of the steel shop, more preferably one floor below the tundish. They are preferably positioned above the corresponding reservoirs and atomizers to make the feeding even easier.

At least one of the plurality of induction furnaces can be a vacuum induction furnace to meet the steel composition of certain powders.

The ferroalloy feeding unit preferably comprises storage silos containing one ferroalloy each and conveying means capable of conveying each ferroalloy to each induction furnace and optionally to the ladle metallurgy furnace. The ferroalloy feeding unit can also comprises storage means for silicide alloys and/or nitride alloys and/or pure elements and conveying means capable of conveying these materials to each induction furnace and optionally to the vacuum arc degasser. The conveying means can be feeding pipes. They can go directly to each induction furnace or can go to a mixing unit where mixes of ferroalloys, silicide alloys, nitride alloys, pure elements are prepared before being conveyed to each induction furnace. The ferroalloy feeding unit can also comprise feeding means for scraps and Direct Reduced Iron.

Each dedicated reservoir is preferably connected to at least two gas atomizer so that one gas atomizer can be shut down, for example for collecting the powder at its bottom, for maintenance or for repair, while maintaining the continuous production of the steel powders.

Each reservoir is preferably connected to the at least one gas atomizer by a feeding pipe. More preferably, the feeding pipe is heated, for example inductively heated, to keep the proper overheating of the molten steel and thus prevent the clogging of the atomizer nozzle. The feeding pipe can be closed thanks to closing means, such as a stopper rod operated from inside the reservoir or a stopper positioned in the feeding pipe.

## Claims

1. Process for the production of steel powders comprising the steps of:
- Providing molten iron from a blast furnace,
- Refining the molten iron in a converter to form molten steel comprising up to 600 ppm C, up to 120 ppm S, up to 125 ppm P, up to 50 ppm N and up to 1200 ppm O,
- Refining the molten steel in a vacuum arc degasser to obtain a refined molten steel comprising from 20 to less than 600 ppm C, from 15 to less than 120 ppm S, up to 125 ppm P, up to 80 ppm N and up to 30 ppm O,
- Pouring the refined molten steel in a plurality of induction furnaces,
- Adding, in each of the plurality of induction furnaces, at least one ferroalloy to adjust the steel composition to the one of the desired steel powder,
- Pouring the molten steel at the desired composition of each induction furnace in a dedicated reservoir connected to at least one gas atomizer,
- Feeding the at least one gas atomizer of each reservoir in molten steel from each reservoir under pressure and gas atomizing said molten steel to form the steel powder at the desired composition.

2. Process according to claim 1 wherein the molten steel comprises up to 250 ppm C and/or up to 90 ppm P and/or up to 25 ppm N.

3. Process according to any one of claims 1 or 2 wherein, during the refinement in the vacuum arc degasser, molten steel is decarburized by using dissolved oxygen in steel.

4. Process according to any one of claims 1 to 3 wherein, during the refinement in the vacuum arc degasser, molten steel is deoxidized until the dissolved O content is lower than or equal to 4 ppm.

5. Process according to any one of claims 1 to 4 wherein, during the refinement in the vacuum arc degasser, molten steel is desulphurized by stirring the slag against the steel.

6. Process according to any one of claims 1 to 5 wherein the temperature of the refined molten steel at the end of the refinement in the vacuum arc degasser is between 1580 and 1680°C.

7. Process according to any one of claims 1 to 6 wherein the refined molten steel is directly poured from the vacuum arc degasser to the plurality of induction furnaces.

8. Process according to any one of claims 1 to 6 wherein the refined molten steel is first poured in a tundish and then poured from the tundish to the plurality of induction furnaces.

9. Process according to claim 8 wherein the tundish is capable of simultaneously pouring the refined molten steel in all the induction furnaces.

10. Process according to any one of claims 8 or 9 wherein the temperature in the tundish is maintained between 1520 and 1620°C.

11. Process according to any one of claims 8 to 10 wherein the tundish is purged with Argon to control the oxygen content in the tundish.

12. Process according to any one of the preceding claims wherein the temperature in the plurality of induction furnaces is maintained between 1500 and 1700°C.

13. Process according to any one of the preceding claims wherein the temperature in at least one of the plurality of induction furnaces is maintained between 1620 and 1650°C.

14. Process according to any one of the preceding claims wherein the ferroalloy added in the induction furnaces is not pre-melted.

15. Process according to any one of the preceding claims wherein scraps or Direct Reduced Iron or silicide alloys or nitride alloys or pure elements or a mixture thereof are added in at least one of the plurality of induction furnaces.

16. Process according to any one of the preceding claims wherein the induction furnaces are not atmospherically controlled.

17. Process according to any one of the preceding claims wherein at least one of the plurality of induction furnaces is a vacuum induction furnace.

18. Process according to any one of the preceding claims wherein the atmosphere in each of the dedicated reservoirs is Argon, Nitrogen or a mixture thereof.

19. Process according to any one of the preceding claims wherein the temperature in each of the dedicated reservoirs is maintained between 1300 and 1750°C.

20. Process according to any one of the preceding claims wherein the temperature in each of the dedicated reservoirs is at least 150°C above the liquidus temperature of the molten steel.

21. Installation for the production of steel powders comprising:
- A blast furnace,
- A converter configured to refine molten iron and form molten steel comprising up to 600 ppm C, up to 120 ppm S, up to 125 ppm P, up to 50 ppm N and up to 1200 ppm O,
- A vacuum arc degasser configured to refine molten steel to obtain a refined molten steel comprising from 20 to less than 600 ppm C, from 15 to less than 120 ppm S, up to 125 ppm P, up to 80 ppm N and up to 30 ppm O,
- A plurality of induction furnaces,
- A ferroalloy feeding unit capable of feeding the plurality of induction furnaces in at least one ferroalloy,
- A dedicated reservoir to each induction furnace, each dedicated reservoir being connected to at least one gas atomizer and capable of being pressurized.

22. Installation according to claim 21 further comprising a tundish capable of simultaneously pouring the molten steel in all the induction furnaces.

23. Installation according to claim 22 wherein the tundish is positioned above the plurality of induction furnaces.

## Patentansprüche

1. Verfahren zur Herstellung von Stahlpulvern, umfassend die folgenden Schritte:
- Bereitstellen von geschmolzenem Eisen aus einem Hochofen,
- Raffination des geschmolzenen Eisens in einem Konverter, um ein geschmolzenes Stahl zu bilden, umfassend bis zu 600 ppm C, bis zu 120 ppm S, bis zu 125 ppm P, bis zu 50 ppm N und bis zu 1200 ppm O,
- Raffination des geschmolzenen Stahls in einem Vakuum-Lichtbogen-Entgaser, um ein raffiniertes geschmolzenes Stahl zu erhalten, umfassend 20 bis weniger als 600 ppm C, 15 bis weniger als 120 ppm S, bis zu 125 ppm P, bis zu 80 ppm N und bis zu 30 ppm O,
- Gießen des raffinierten geschmolzenen Stahls in eine Vielzahl von Induktionsöfen,
- Hinzufügen, in jedem der Vielzahl von Induktionsöfen, mindestens einer Ferrolegierung, um die Zusammensetzung des Stahls an diejenige des gewünschten Stahlpulvers anzupassen,
- Gießen des geschmolzenen Stahls mit der gewünschten Zusammensetzung jedes Induktionsofens in einen dedizierten Behälter, der mit mindestens einem Gaszerstäuber verbunden ist,
- Speisen mindestens eines Gaszerstäubers jedes Behälters mit geschmolzenem Stahl aus jedem Behälter unter Druck und Gaszerstäuben des genannten geschmolzenen Stahls, um das Stahlpulver mit der gewünschten Zusammensetzung zu bilden.

2. Verfahren nach Anspruch 1 in dem der geschmolzene Stahl bis zu 250 ppm C und/oder bis zu 90 ppm P und/oder bis zu 25 ppm N umfasst.

3. Verfahren nach einem beliebigen der Ansprüche 1 oder 2 in dem, während der Raffination in dem Vakuum-Lichtbogen-Entgaser, der geschmolzene Stahl durch Verwendung von in dem Stahl gelöstem Sauerstoff entkohlt wird.

4. Verfahren nach einem beliebigen der Ansprüche 1 bis 3 in dem, während der Raffination in dem Vakuum-Lichtbogen-Entgaser, der geschmolzene Stahl desoxidiert wird, bis der Gehalt an gelöstem O kleiner als oder gleich 4 ppm ist.

5. Verfahren nach einem beliebigen der Ansprüche 1 bis 4 in dem, während der Raffination in dem Vakuum-Lichtbogen-Entgaser, der geschmolzene Stahl durch Rühren der Schlacke gegen den Stahl entschwefelt wird.

6. Verfahren nach einem beliebigen der Ansprüche 1 bis 5 in dem die Temperatur des raffinierten geschmolzenen Stahls am Ende der Raffination in dem Vakuum-Lichtbogen-Entgaser zwischen 1580 und 1680 °C ist.

7. Verfahren nach einem beliebigen der Ansprüche 1 bis 6 in dem der raffinierte geschmolzene Stahl direkt aus dem Vakuum-Lichtbogen-Entgaser zu der Vielzahl von Induktionsöfen gegossen wird.

8. Verfahren nach einem beliebigen der Ansprüche 1 bis 6 in dem das raffinierte geschmolzene Stahl zuerst in einen Verteiler gegossen und dann aus dem Verteiler zu der Vielzahl von Induktionsöfen gegossen wird.

9. Verfahren nach Anspruch 8 in dem der Verteiler fähig ist, gleichzeitig den raffinierten geschmolzenen Stahl in alle Induktionsöfen zu gießen.

10. Verfahren nach einem beliebigen der Ansprüche 8 oder 9 in dem die Temperatur in dem Verteiler zwischen 1520 und 1620°C gehalten wird.

11. Verfahren nach einem beliebigen der Ansprüche 8 bis 10 in dem der Verteiler mit Argon gespült wird, um den Sauerstoffgehalt in dem Verteiler zu kontrollieren.

12. Verfahren nach einem beliebigen der vorhergehenden Ansprüche in dem die Temperatur in der Vielzahl von Induktionsöfen zwischen 1500 und 1700°C gehalten wird.

13. Verfahren nach einem beliebigen der vorhergehenden Ansprüche in dem die Temperatur in mindestens einem der Vielzahl von Induktionsöfen zwischen 1620 und 1650°C gehalten wird.

14. Verfahren nach einem beliebigen der vorhergehenden Ansprüche in dem die in den Induktionsöfen hinzugefügte Ferrolegierung nicht vor-geschmolzen ist.

15. Verfahren nach einem beliebigen der vorhergehenden Ansprüche in dem Schrotte oder Direktreduziertes Eisen oder Silizidlegierungen oder Nitridlegierungen oder reine Elemente oder eine Mischung von diesen in mindestens einem der Vielzahl von Induktionsöfen hinzugefügt werden.

16. Verfahren nach einem beliebigen der vorhergehenden Ansprüche in dem die Induktionsöfen nicht atmosphärisch kontrolliert werden.

17. Verfahren nach einem beliebigen der vorhergehenden Ansprüche in dem mindestens einer der Vielzahl von Induktionsöfen ein Induktionsofen unter Vakuum ist.

18. Verfahren nach einem beliebigen der vorhergehenden Ansprüche in dem die Atmosphäre in jedem der dedizierten Behälter Argon, Stickstoff oder eine Mischung von diesen ist.

19. Verfahren nach einem beliebigen der vorhergehenden Ansprüche in dem die Temperatur in jedem der dedizierten Behälter zwischen 1300 und 1750°C gehalten wird.

20. Verfahren nach einem beliebigen der vorhergehenden Ansprüche in dem die Temperatur in jedem der dedizierten Behälter mindestens 150°C oberhalb der Liquidustemperatur vom geschmolzenen Stahl ist

21. Anlage zur Herstellung von Stahlpulvern, umfassend:
- Einen Hochofen,
- Einen Konverter, konfiguriert, um geschmolzenes Eisen zu raffinieren und geschmolzenen Stahl zu bilden, umfassend bis zu 600 ppm C, bis zu 120 ppm S, bis zu 125 ppm P, bis zu 50 ppm N und bis zu 1200 ppm O,
- Einen Vakuum-Lichtbogen-Entgaser, konfiguriert, um geschmolzenen Stahl zu raffinieren, um raffinierten geschmolzenen Stahl zu erhalten, umfassend 20 bis weniger als 600 ppm C, 15 bis weniger als 120 ppm S, bis zu 125 ppm P, bis zu 80 ppm N und bis zu 30 ppm O,
- Eine Vielzahl von Induktionsöfen,
- Eine Ferrolegierungs-Speiseeinheit, die geeignet ist, die Vielzahl von Induktionsöfen mit mindestens einer Ferrolegierung zu speisen,
- Einen jedem Induktionsofen dedizierten Behälter, wobei jeder dedizierte Behälter mit mindestens einem Gaszerstäuber verbunden ist und geeignet ist, unter Druck gesetzt zu werden.

22. Anlage nach Anspruch 21, ferner umfassend einen Verteiler, der geeignet ist, das geschmolzene Stahl gleichzeitig in alle Induktionsöfen zu gießen.

23. Anlage nach Anspruch 22, in der der Verteiler oberhalb der Vielzahl von Induktionsöfen positioniert ist.

## Revendications

1. Procédé pour la production de poudres d'acier comprenant les étapes consistant à :
- Fournir du fer fondu depuis un haut fourneau,
- Raffiner du fer fondu dans un convertisseur pour former un acier fondu comprenant jusqu'à 600 ppm de C, jusqu'à 120 ppm de S, jusqu'à 125 ppm de P, jusqu'à 50 ppm de N et jusqu'à 1200 ppm de O,
- Raffiner de l'acier fondu dans un dégazeur à arc sous vide pour obtenir un acier fondu raffiné comprenant de 20 à moins de 600 ppm de C, de 15 à moins de 120 ppm de S, jusqu'à 125 ppm de P, jusqu'à 80 ppm de N et jusqu'à 30 ppm de O,
- Couler de l'acier fondu raffiné dans une pluralité de fours à induction,
- Ajouter, dans chacun de la pluralité de fours à induction, au moins un ferroalliage pour ajuster la composition de l'acier à celle de la poudre d'acier souhaitée,
- Couler de l'acier fondu à la composition souhaitée de chaque four à induction dans un réservoir dédié connecté à au moins un atomiseur à gaz,
- Alimenter au moins un atomiseur à gaz de chaque réservoir en acier fondu depuis chaque réservoir sous pression et atomiser au gaz ledit acier fondu pour former la poudre d'acier à la composition souhaitée.

2. Procédé selon la revendication 1 dans lequel l'acier fondu comprend jusqu'à 250 ppm de C et/ou jusqu'à 90 ppm de P et/ou jusqu'à 25 ppm de N.

3. Procédé selon l'une quelconque des revendications 1 ou 2 dans lequel, pendant le raffinage dans le dégazeur à arc sous vide, l'acier fondu est décarburé par utilisation d'oxygène dissous dans l'acier.

4. Procédé selon l'une quelconque des revendications 1 à 3 dans lequel, pendant le raffinage dans le dégazeur à arc sous vide, l'acier fondu est désoxydé jusqu'à ce que la teneur en O dissous soit inférieure ou égale à 4 ppm.

5. Procédé selon l'une quelconque des revendications 1 à 4 dans lequel, pendant le raffinage dans le dégazeur à arc sous vide, l'acier fondu est désulfuré par agitation du laitier contre l'acier.

6. Procédé selon l'une quelconque des revendications 1 à 5 dans lequel la température de l'acier fondu raffiné à la fin du raffinage dans le dégazeur à arc sous vide est entre 1580 et 1680 °C.

7. Procédé selon l'une quelconque des revendications 1 à 6 dans lequel l'acier fondu raffiné est directement coulé depuis le dégazeur à arc sous vide vers la pluralité de fours à induction.

8. Procédé selon l'une quelconque des revendications 1 à 6 dans lequel l'acier fondu raffiné est d'abord coulé dans un répartiteur puis coulé depuis le répartiteur vers la pluralité de fours à induction.

9. Procédé selon la revendication 8 dans lequel le répartiteur est capable de couler simultanément l'acier fondu raffiné dans tous les fours à induction.

10. Procédé selon l'une quelconque des revendications 8 ou 9 dans lequel la température dans le répartiteur est maintenue entre 1520 et 1620°C.

11. Procédé selon l'une quelconque des revendications 8 à 10 dans lequel le répartiteur est purgé avec de l'Argon pour contrôler la teneur en oxygène dans le répartiteur.

12. Procédé selon l'une quelconque des revendications précédentes dans lequel la température dans la pluralité de fours à induction est maintenue entre 1500 et 1700°C.

13. Procédé selon l'une quelconque des revendications précédentes dans lequel la température dans au moins un de la pluralité de fours à induction est maintenue entre 1620 et 1650°C.

14. Procédé selon l'une quelconque des revendications précédentes dans lequel le ferroalliage ajouté dans les fours à induction n'est pas pré-fondu.

15. Procédé selon l'une quelconque des revendications précédentes dans lequel des ferrailles ou du Fer Réduit Direct ou des alliages de siliciure ou des alliages de nitrure ou des éléments purs ou un mélange de ceux-ci sont ajoutés dans au moins un de la pluralité de fours à induction.

16. Procédé selon l'une quelconque des revendications précédentes dans lequel les fours à induction ne sont pas contrôlés atmosphériquement.

17. Procédé selon l'une quelconque des revendications précédentes dans lequel au moins un de la pluralité de fours à induction est un four à induction sous vide.

18. Procédé selon l'une quelconque des revendications précédentes dans lequel l'atmosphère dans chacun des réservoirs dédiés est de l'Argon, de l'Azote ou un mélange de ceux-ci.

19. Procédé selon l'une quelconque des revendications précédentes dans lequel la température dans chacun des réservoirs dédiés est maintenue entre 1300 et 1750°C.

20. Procédé selon l'un quelconque des revendications précédentes dans lequel la température dans chacun des réservoirs dédiés est au moins 150°C au-dessus de la température du liquidus de l'acier fondu

21. Installation pour la production de poudres d'acier comprenant :
- Un haut fourneau,
- Un convertisseur configuré pour raffiner du fer fondu et former de l'acier fondu comprenant jusqu'à 600 ppm de C, jusqu'à 120 ppm de S, jusqu'à 125 ppm de P, jusqu'à 50 ppm de N et jusqu'à 1200 ppm d'O,
- Un dégazeur à arc sous vide configuré pour raffiner l'acier fondu afin d'obtenir un acier fondu raffiné comprenant de 20 à moins de 600 ppm de C, de 15 à moins de 120 ppm de S, jusqu'à 125 ppm de P, jusqu'à 80 ppm de N et jusqu'à 30 ppm d'O,
- Une pluralité de fours à induction,
- Une unité d'alimentation en ferroalliage capable d'alimenter la pluralité de fours à induction en au moins un ferroalliage,
- Un réservoir dédié à chaque four à induction, chaque réservoir dédié étant connecté à au moins un atomiseur à gaz et capable d'être pressurisé.

22. Installation selon la revendication 21 comprenant en outre un répartiteur capable de couler simultanément l'acier fondu dans tous les fours à induction.

23. Installation selon la revendication 22 dans laquelle le répartiteur est positionné au-dessus de la pluralité de fours à induction.
